# EUROPEAN PATENT SPECIFICATION

(11) **EP 3 637 598 B1**
(45) Date of publication and mention of the grant of the patent: **26.07.2023**
(21) Application number: 19201142.7
(22) Date of filing: 02.10.2019
(51) Int. Cl.: H02K 15/02, C25D 1/00

(54) **ELECTROFORMING ASSEMBLIES FOR ELECTRICAL MACHINES**
ELEKTROFORMANORDNUNGEN FÜR ELEKTRISCHE MASCHINEN
ENSEMBLES D'ÉLECTROFORMAGE POUR MACHINES ÉLECTRIQUES

(30) Priority: 08.10.2018 US 201816154498
(43) Date of publication of application: 15.04.2020
(60) Divisional application: 23179227.6
(73) Proprietor: GE Aviation Systems LLC, Grand Rapids, MI 49512 (US)
(72) Inventor: SRIDHARAN, Balamurugan, Grand Rapids, MI Michigan 49512 (US); RAMAKRISHNAIAH, Mamatha, Grand Rapids, MI Michigan 49512 (US); JONNALAGADDA, Dattu, Grand Rapids, MI Michigan 49512 (US); SWAMINATHAN, Srinivasan, Grand Rapids, 49512 (US)
(74) Representative: Openshaw & Co.

(56) References cited:
- EP-A1- 3 051 664
- CN-A- 107 659 076
- GB-A- 1 400 200
- JP-A- 2015 101 741
- US-A1- 2001 014 409
- US-A1- 2005 034 295
- US-A1- 2018 274 118
- US-B1- 7 526 855

## Description

### TECHNICAL FIELD

The disclosure relates to electrical machines having at least one stator or rotor and methods for forming same.

### BACKGROUND

Electrical machinery, such as generators, motors, motor/generators, starter/generators, and other electrical machinery can be used for a variety of purposes. An electrical machine can include a stator and a rotor. The rotor can be rotated relative to the stator to generate electrical energy and/or can be rotated relative to the stator as a result of changing magnetic fields induced in windings of the stator. Such electrical machinery can be included in, by way of non-limiting example, a gas turbine engine.

EP 3,051,664 B1 describes manufacturing high temperature laminated stator cores. US 2018/274118 A1 describes a process where conductor ends are atomically connected by metal deposited through plating.

US 2005/034295 A1 describes a rotor assembly or other rotating device having a stack of laminations or laminates that are chemically bonded together.

### BRIEF DESCRIPTION

The invention is defined by the appended claims. Claim 1 defines a method of forming a layered electrical machine component for an electrical machine. In the following, any method and/or apparatus referred to as embodiments but nevertheless do not fall within the scope of the appended claims are to be understood as examples helpful in understanding the invention.

In one aspect, the disclosure relates to a method of forming a layered electrical machine component for an electrical machine. The method includes electroforming a first metallic layer having a first predetermined geometry, thereby forming a first discrete metal laminate; electroforming a second metallic layer separate from the first metallic layer and also having the first predetermined geometry, thereby forming a second discrete metal laminate, wherein the first discrete metal laminate and the second discrete metal laminate at least partially define a first set of metal laminates having the first predetermined geometry, wherein the electroforming comprises electrodeposition onto a polymeric or composite base sheet, and wherein one or both of the first set of discrete metal laminates is formed in a batch, the batch being a collection of metal laminates having the first predetermined geometry and formed on the polymeric or composite base sheet; and arranging an insulating layer between the first discrete metal laminate and the second discrete metal laminate in a stack to define a layered electrical machine component having the predetermined geometry.

### BRIEF DESCRIPTION OF THE DRAWINGS

In the drawings:
FIG. 1 is a perspective view of a gas turbine engine with an electrical machine in the form of an electric generator in accordance with various aspects described herein.
FIG. 2 is an enlarged perspective view of the electric generator of FIG. 1.
FIG. 3 is a perspective view of a rotor in the electrical machine of FIG. 1.
FIG. 4 is a schematic top view of a set of laminates that can be utilized in the rotor of FIG. 3.
FIG. 5 is a schematic view of an electroforming bath for forming the set of laminates of FIG. 4.
FIG. 6 is a perspective view a rotor and stator assembled to form a generator core in the electric generator of FIG. 1.
FIG. 7 is a schematic view of first and second sets of laminates that can be utilized to form the rotor and stator of FIG. 6.
FIG. 8 is a schematic view of alternate sets of laminates that can be utilized to form a rotor and stator in the electrical machine of FIG. 1.
FIG. 9 is a flowchart illustrating a method of forming the electrical machine of FIG. 1.

### DETAILED DESCRIPTION

Conventional methods of manufacturing an electrical machine or components therefore can include, for instance, punching, stamping, or cutting laminations to shape, stacking the oxidized laminations to form a core, winding coils made of insulated wire, inserting slot liners and coils into slots of the core, sliding slot wedges at the top of a slot, forming end turns, shrinking/fitting the core onto a pre-machined shaft, and then performing final machining. While such methods may be used to form satisfactory electric machines and components therefore, such methods may be technically complex, inefficient, and costly.

Therefore, improved methods for manufacturing electric machines that address one or more of the challenges noted above would be useful. The present disclosure is related to a method of forming at least portions of an electrical machine with a laminated or layered structure. Aspects of the disclosure will be described in the context of a turbine engine generator. However, the disclosure is not so limited and aspects described herein can have general applicability, including that the electrical machine can be utilized in any suitable mobile and non-mobile industrial, commercial, and residential applications.

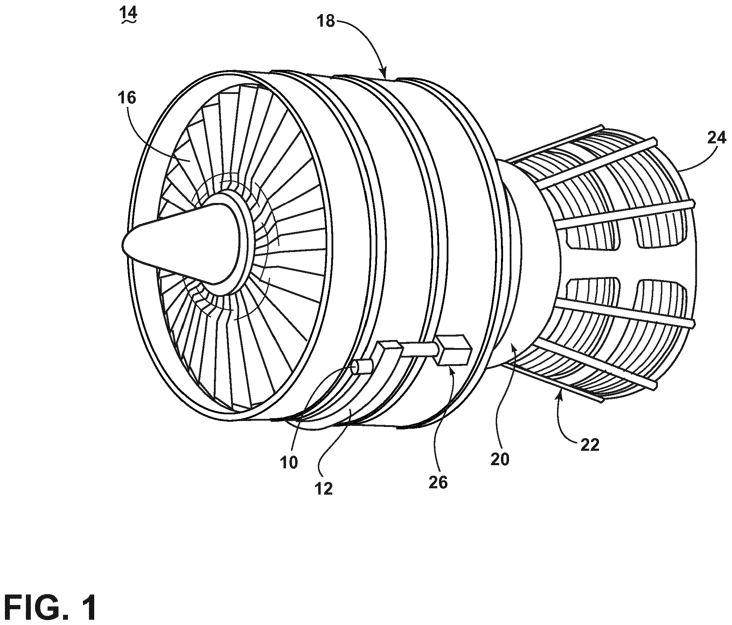

Referring to FIG. 1, an electrical machine 1 in the form of an electric generator 10 is coupled to an accessory gear box (AGB) 12, also known as a transmission housing, and together are schematically illustrated as being mounted to a gas turbine engine 14. This assembly is commonly referred to as an Integrated Starter/Generator Gearbox (ISGB). The gas turbine engine 14 comprises an air intake with a fan 16 that supplies air to a high pressure compression region 18. The air intake with a fan 16 and the high pressure compression region collectively are known as the 'cold section' of the gas turbine engine upstream of the combustion. The high pressure compression region 18 provides a combustion chamber 20 with high pressure air. In the combustion chamber, the high pressure air is mixed with fuel and combusted. The hot and pressurized combusted gas passes through a high pressure turbine region 22 and a low pressure turbine region 24 before exhausting from the gas turbine engine. As the pressurized gases pass through the high pressure turbine (not shown) of the high pressure turbine region 22 and the low pressure turbine (not shown) of the low pressure turbine region 24, the turbines extract rotational energy from the flow of the gases passing through the gas turbine engine 14. The high pressure turbine of the high pressure turbine region 22 can be coupled to the compression mechanism (not shown) of the high pressure compression region 18 by way of a shaft to power the compression mechanism. The low pressure turbine can be coupled to the fan 16 of the air intake by way of a shaft to power the fan 16.

The gas turbine engine can be a turbofan engine or a variety of other known gas turbine engines such as a turboprop or turboshaft. The gas turbine engine can also have an afterburner that burns an additional amount of fuel downstream of the low pressure turbine region 24 to increase the velocity of the exhausted gases, and thereby increasing thrust.

The AGB 12 is coupled to a turbine shaft of the gas turbine engine 14, either to the low pressure or high pressure turbine by way of a mechanical power take-off 26. The mechanical power take-off 26 contains multiple gears and means for mechanical coupling of the AGB 12 to the gas turbine engine 14. The electric generator 10 can be mounted on the outside of either the air intake region containing the fan 16 or on the core near the high pressure compression region 18.

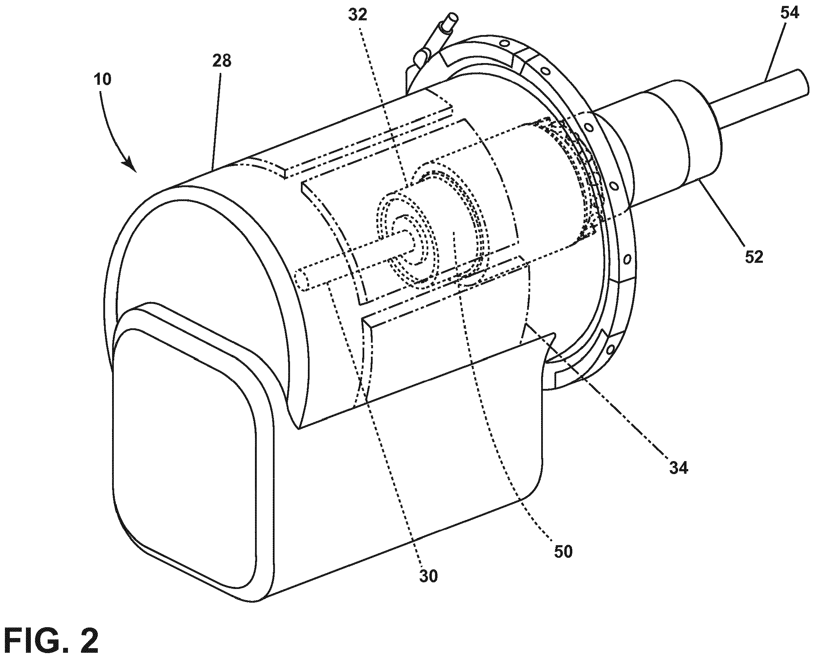

Referring now to FIG. 2, the electric generator 10 is depicted in perspective view. The electric generator 10 can be formed by any known materials and methods, including, but not limited to, die-casting of high strength and lightweight metals such as aluminum, stainless steel, iron, or titanium. The housing for the electric generator 10 can be formed with a thickness sufficient to provide adequate mechanical rigidity without adding unnecessary weight to the electric generator 10 and, therefore, the aircraft.

While illustrated as an electric generator the electric generator 10 can be any electric generator known in the art. The electric generator 10 can operate as a generator to provide power for accessories attached to the turbine engine 14 including, but not limited to, a fuel pump, oil pump, or a separate engine starter. It is also contemplated that the electric generator 10 can operate as a motor supplying mechanical output where necessary, for example but not limited to supplying mechanical output torque sufficient to start the engine.

A housing 28 of the electric generator 10 encompasses a rotatable shaft 30 journaled within. A rotor 32 is mounted to the rotatable shaft 30 and a stator 34 is mounted to the housing 28. The rotor 32 terminates in an actuator 50 operably coupled to an output shaft 52. An input shaft 54 extends from within the output shaft 52 and can be operably coupled to a portion of the AGB 12 (FIG. 1).

The rotatable shaft 30 can be constructed by any known materials and methods, including, but not limited to extrusion or machining of high strength metal alloys such as those containing aluminum, iron, nickel, chromium, titanium, tungsten, vanadium, or molybdenum. The diameter of the rotor 32, output shaft 52, and input shaft 54 can be fixed or vary along the length of the rotatable shaft 30. A diameter of the rotatable shaft 30, along with a spacing between the rotor 32 and stator 34, can vary to accommodate different size electric generators.

It is contemplated that the electric generator 10 can be a driving mechanism for driving the rotation of the rotatable shaft 30. For example, during starting operations, the electric generator 10 via the output shaft 52 can be the driving mechanism for rotation of the rotatable shaft 30. The non-driving mechanism, that is, the equipment being driven by the driving mechanism, can be understood as rotating equipment utilizing the rotational movement of the rotatable shaft 30, for example to generate electricity in the electric generator 10.

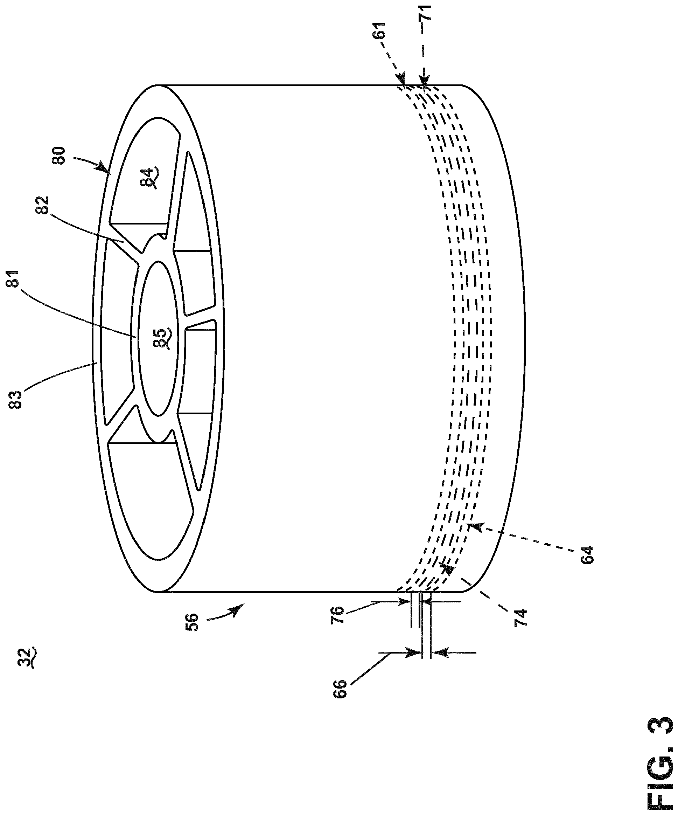

It is also contemplated that a layered core component can be included in the electric generator 10, such as the rotor 32, the stator 34, or both. The rotor 32 is illustrated in FIG. 3 as being formed from a first stack 56 defined by a first set 61 of electroformed metal laminates 64 and a first set 71 of insulating layers 74. While layers along only a portion of the height of the first stack have been illustrated it will be understood that the entire height of the stack is made out of such layers. In the illustrated example, the first stack 56 is formed by alternating metal laminates 64 and insulating layers 74. It is also contemplated that the first stack 56 can be formed from any combination of metal laminates 64 and insulating layers 74. For example, multiple insulating layers can be arranged between each metal laminate in an alternate example (not shown). It will also be understood that the metal laminates 64 and insulating layers 74 have been illustrated as slightly spaced apart for clarity, and that the metal laminates 64 and insulating layers 74 would abut each other in the first stack 56.

As used herein, "electroforming" or "electrodeposition" can include any process for building, forming, growing, or otherwise creating a metal layer over another substrate or base. Non-limiting examples of electrodeposition can include electroforming, electroless forming, electroplating, or a combination thereof. While the remainder of the disclosure is directed to electroforming, any and all electrodeposition processes are equally applicable.

The metal laminates 64 can be made from any suitable electroformable material including cobalt, lead, nickel, copper, titanium, rhodium, or alloys thereof. The metal laminates 64 can each have a laminate thickness 66 such as 50 micrometers or greater in one example. The insulating layers 74 can include any suitable insulating material including epoxy, ductboard, enamel, or magnesium oxide. In some examples the insulating layer 74 can be a liquid applied to or deposited on a metal laminate 64 (e.g. a liquid varnish or liquid epoxy), and in other examples the insulating layer 74 can be a solid layer disposed between adjacent metal laminates 64.

The insulating layer 74 can define a layer thickness 76. In one example, the layer thickness 76 can be the same as the laminate thickness 66. In another example, the layer thickness 76 can be greater than the layer thickness 76, such as 5 mm or larger. While two metal laminates 64 and two insulating layers 74 are illustrated within the first stack 56, it should be understood that any number can be utilized. In addition, the metal laminates 64 and insulating layers 74 are drawn with an exaggerated thickness for clarity, and the relative size of the laminate thickness 66 and layer thickness 76 can vary with respect to the overall size of the first stack 56.

Further still, each of the metal laminates 64 and the insulating layers 74 have a first predetermined geometry 80 defined by an inner hub 81 connected to a rim 83 via multiple spokes 82 as shown. Apertures 84 are defined between adjacent spokes 82 and a central aperture 85 is formed within the inner hub 81 and configured to receive the rotatable shaft 30 (FIG. 2). When arranged into the first stack 56 the rotor 32, metal laminates 64, and insulating layers 74 all have the same first predetermined geometry 80, with the apertures 84 and central aperture 85 extending through the rotor 32.

It should be understood that any desired predetermined geometry or geometric profile can be utilized for the first set 61 of metal laminates 64 as well as the first set 71 of insulating layers 74. The geometric profile can be tailored for a variety of applications. For example, in the context of the generator 10 in the turbine engine 14, the predetermined geometry can define a set of rotor poles (not shown) circumferentially spaced about the rotor 32 as well as a set of stator poles (not shown) circumferentially spaced about the stator 34. In such a case the set of rotor poles can generate a set of magnetic fields relative to the set of stator poles, wherein rotation of the rotor magnetic fields relative to the stator poles can generate a current in the respective stator components.

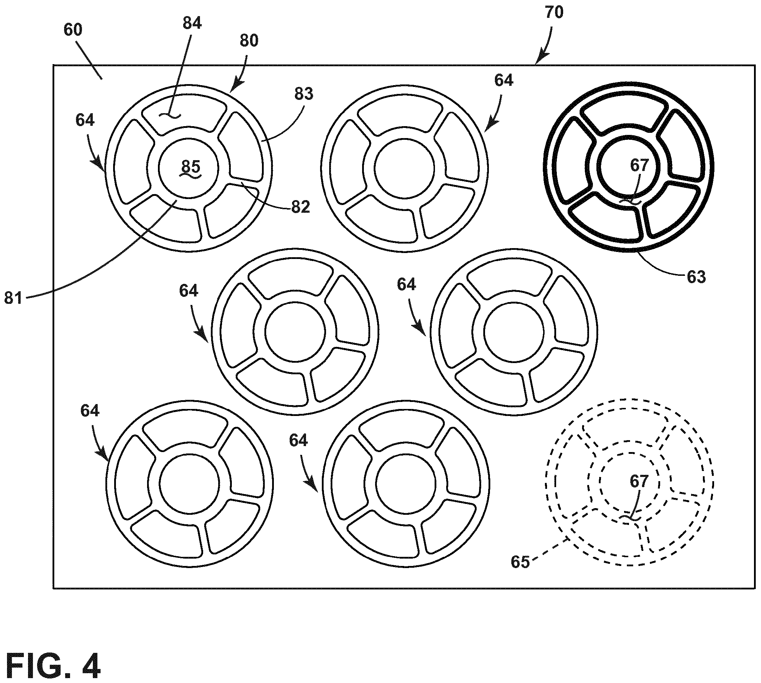

FIG. 4 illustrates a base sheet 60 having a number of metal laminates 64 of the rotor 32. The base sheet 60 can include any suitable material upon which the metal laminates 64 can be formed, including a polymeric or composite material. In one example, the base sheet 60 can have a flat surface over which a mask 63 can be applied to define at least one exposed region 67 having the first predetermined geometry 80. In another example, the base sheet 60 can include a recess 65 defining the exposed region 67 within which a metal laminate can be formed.

A number of the metal laminates 64 having the first predetermined geometry 80 can be formed in batches 70, where the batch 70 can refer to the collection of metal laminates 64 having the first predetermined geometry 80 formed on each base sheet 60. Any number of metal laminates 64 can be included in the batch 70. For clarity, metal laminates are not shown within the two illustrated exposed regions 67, and it should be understood that the batch 70 can include eight metal laminates 64 formed on the base sheet 60. The base sheet 60 can also have any suitable sheet dimension such as 25 cm x 25 cm; any size base sheet 60 and number of metal laminates 64 formed in each batch can be utilized. In another non-limiting example, a base sheet (not shown) can have a sheet dimension of 50 cm × 60 cm and include eighteen metal laminates in each batch.

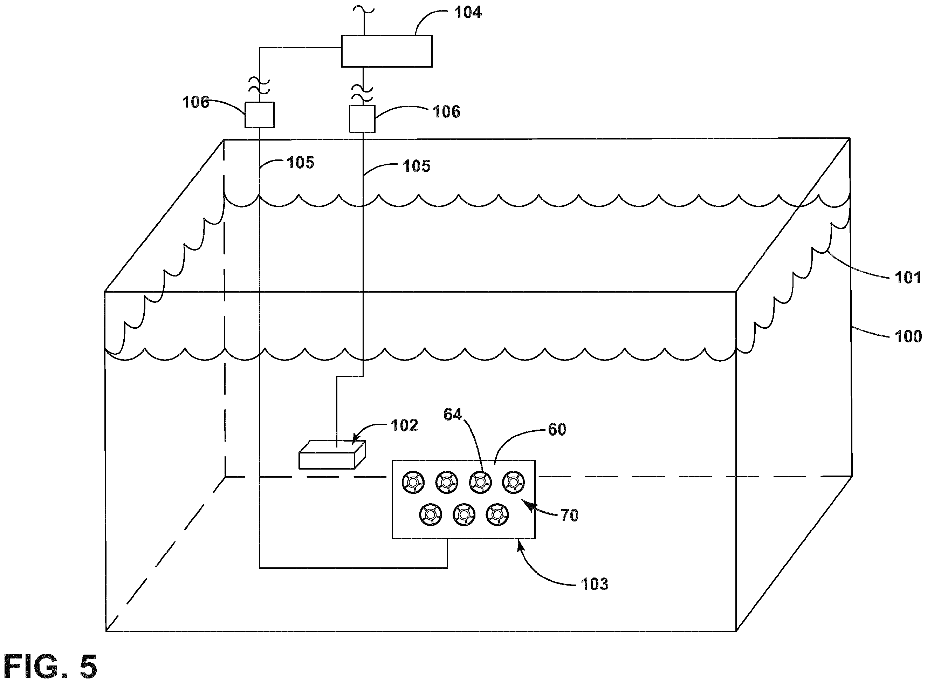

The electroforming process is illustrated by way of an electrodeposition bath in FIG. 5. An exemplary bath tank 100 carries a single metal constituent solution 101. The single metal constituent solution 101, in one non-limiting example, can include nickel alloy carrying alloying metal ions.

An anode 102 spaced from a cathode 103 is provided in the bath tank 100. The anodes 102 can be sacrificial anodes or an inert anode. While one anode 102 is shown, it should be understood that the bath tank 100 can include any number of anodes 102 as desired. The base sheet 60 can form the cathode 103, having electrically conductive material. It is also contemplated that a conductive treatment, such as a conductive spray, can be provided to the base sheet 60 to facilitate formation of the cathode 103. The conductive spray can be applied to at least one exposed region 67 of the base sheet 60. In one example where the base sheet 60 includes the recess 65, such a conductive spray can be provided on the exposed region 67 within the recess 65 where the metal laminates 64 will be electroformed. In an alternate example, such a conductive spray can be applied to the exposed region 67 on the base sheet 60 defined by the mask 63 and having the desired geometric profile (e.g. the first predetermined geometry 80) to facilitate formation of the cathode 103 and electroform the metal laminates 64 having the desired geometric profile. In addition, while illustrated as one cathode 103, it should be appreciated that one or more cathodes are contemplated for use in the bath tank 100.

A controller 104, which can include a power supply, can electrically couple to the anode 102 and the cathode 103 by electrical conduits 105 to form a circuit via the conductive single metal constituent solution 101. Optionally, a switch 106 or sub-controller can be included along the electrical conduits 105, between the controller 104 and the anode 102 and cathode 103. During operation, a current can be supplied from the anode 102 to the cathode 103 to electroform the batch 70 of metal laminates 64 on or within the base sheet 60. During supply of the current, nickel, nickel cobalt, and nickel alloys from the single metal constituent solution 101 form a metallic layer, such as the metal laminate 64 having the first predetermined geometry 80 (FIG. 3).

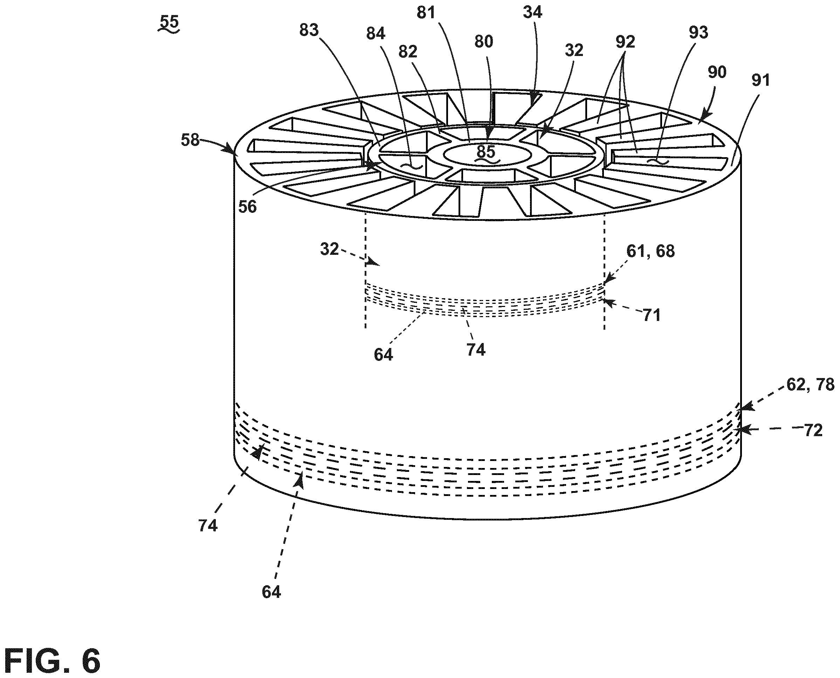

FIG. 6 illustrates that the rotor 32 and stator 34 can each include layers of electroformed metal laminates and insulating layers. As shown the rotor 32 and stator 34 are assembled to form a layered electrical machine, such as a generator core component 55 for the turbine engine 14 (FIG. 1). The rotor 32 defining the first stack 56 is positioned within the stator 34. The stator 34 can define a second stack 58 arranged with a second set 62 of electroformed metal laminates or metal laminates 64 alternating with a second set 72 of insulating layers 74 . It will also be understood that the metal laminates 64 and insulating layers 74 have been illustrated as slightly spaced apart for clarity, and that the metal laminates 64 and insulating layers 74 would abut each other in the first and second stacks 56, 58.

The second set 62 of metal laminates 64 includes a second predetermined geometry 90 different from that of the first predetermined geometry 80. The second predetermined geometry 90 can include an outer rim 91 connecting multiple radial spokes 92. Apertures 93 can be defined between adjacent radial spokes 92 as shown. In this manner, the first set 61 can define a set 68 of rotor portion laminates 69 having the first predetermined geometry 80, and the second set 62 can define a set 78 of stator portion laminates 79 having the second predetermined geometry 90. It can also be appreciated that the first stack 56 (e.g. the rotor 32) has the first predetermined geometry 80 from the stacked rotor portion laminates 69 and insulating layers 74 all having the same first predetermined geometry 80. The second stack 56 (e.g. the stator 34) has the second predetermined geometry 90 from the stacked stator portion laminates 79 and insulating layers 74 having the same second predetermined geometry 90. It will be understood that any desired predetermined geometry or geometric profile can be utilized for either or both of the rotor 32 and stator 34.

Rotation of the rotor 32 can also induce eddy currents within the stator 34, which can remove rotational energy from the rotor 32 and reduce the efficiency of the generator 10 as well as cause resistive heating within the generator 10. The presence of insulating layers can limit the formation or reduce the strength of such eddy currents. In addition, the geometric profile of the rotor 32 or stator 34 can also be utilized to limit a direction or strength of induced eddy currents to minimize any energy losses.

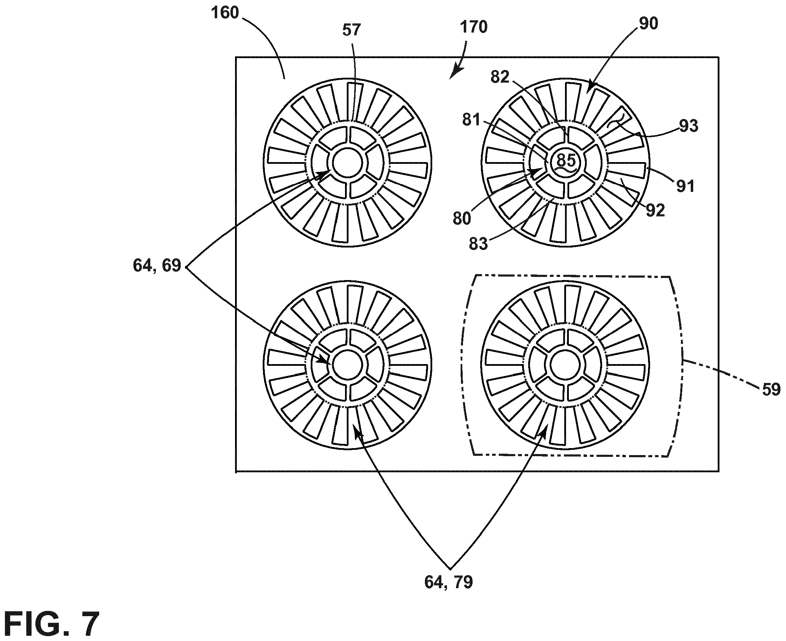

FIG. 7 illustrates that multiple sets of metal laminates for rotors and stators can be simultaneously electroformed in each batch. As illustrated, a base sheet 160 similar to the base sheet 60 carries a batch 170 having the first set 61 of metal laminates 64 formed together with a second set 62 of metal laminates 64. In the illustrated example, each batch 170 includes four metal laminates 64 having the first predetermined geometry 80 and four metal laminates 64 having the second predetermined geometry 90.

In the illustrated example, the radial spokes 92 of the stator portion laminates 79 terminate on the rim 83 of the rotor portion laminates 69. In such a case, the rotor and stator portion laminates 69, 79 can be separated by any suitable method such as laser cutting. A dashed line illustrates an exemplary separation boundary 57 (e.g. for laser cutting) between the rotor and stator portion laminates 69, 79. The separation boundary 57 is shown along the outermost edges of the radial spokes 92 to define the rim 83, although other separation boundaries may be utilized. In an alternate example (not shown), the metal stator and rotor portion laminates can be formed on a sheet with a gap therebetween, where no additional separation or cutting is needed between the rotor and stator portion laminates. In such a case, a shield could be utilized between the metal stator and rotor portion laminates to maintain the gap during electroforming.

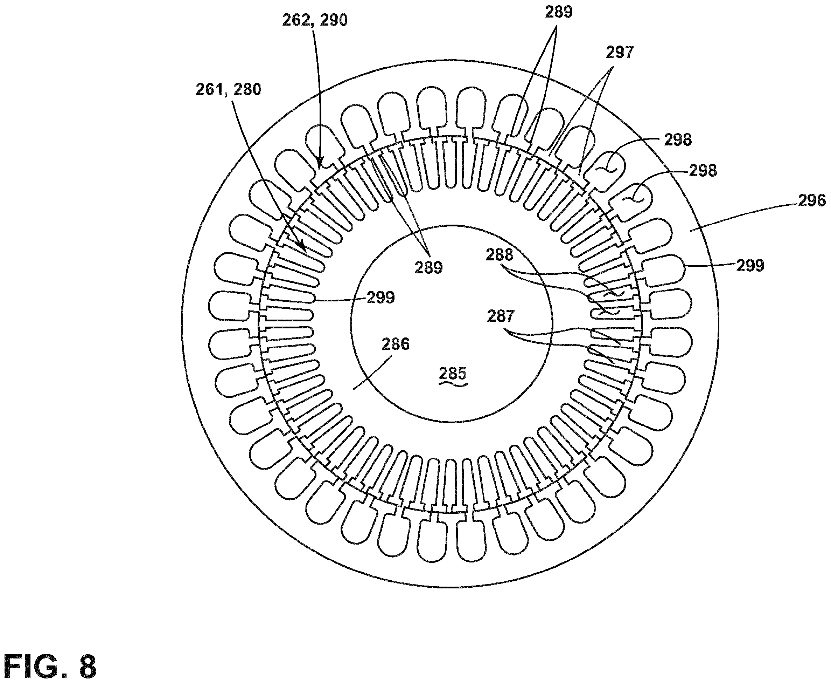

FIG. 8 illustrates another group of metal laminates that can be utilized in the electrical machine 1 (FIG. 1). A first set 261 of metal laminates 64 having a first predetermined geometry 280 is shown along with a second set 262 of metal laminates 64 having a second predetermined geometry 290. It is contemplated that the first and second sets 261, 262 can be electroformed simultaneously on the same sheet (not shown). The first set 261 can be utilized to form the layered rotor 32 (FIG. 2), and the second set 262 can be utilized to form the layered stator 34 (FIG. 2).

The first set 261 is similar to the set 61, where the first predetermined geometry 280 includes a central aperture 285 as shown. One difference is that the first predetermined geometry 280 includes an inner core body 286 with a plurality of first poles or first teeth 287 projecting radially outward therefrom, First slots 288 are defined between adjacent first teeth 287. In addition, the second set 262 is similar to the set 62, with one difference being that the second predetermined geometry 290 includes an outer core body 296 with a plurality of second poles or second teeth 297 projecting radially inward therefrom. Second slots 298 are defined between adjacent second teeth 297.

Another difference is that each of the first teeth 287 and second teeth 297 can include circumferentially-extending tips 289. Each of the first slots 288 and second slots 298 also include a U-shaped portion 299 opposite the circumferentially-extending tips 289. When assembled, the first teeth 287 confront the second teeth 297. It should also be understood that the first set 261 and second set 262 can be separated after electroforming, e.g. along a boundary between the first teeth 287 and the second teeth 297, or the first set 261 and second set 262 can be electroformed with a gap or space therebetween. It is further contemplated that a shield could be utilized between the first and second teeth 287, 297 to maintain a predetermined gap during electroforming.

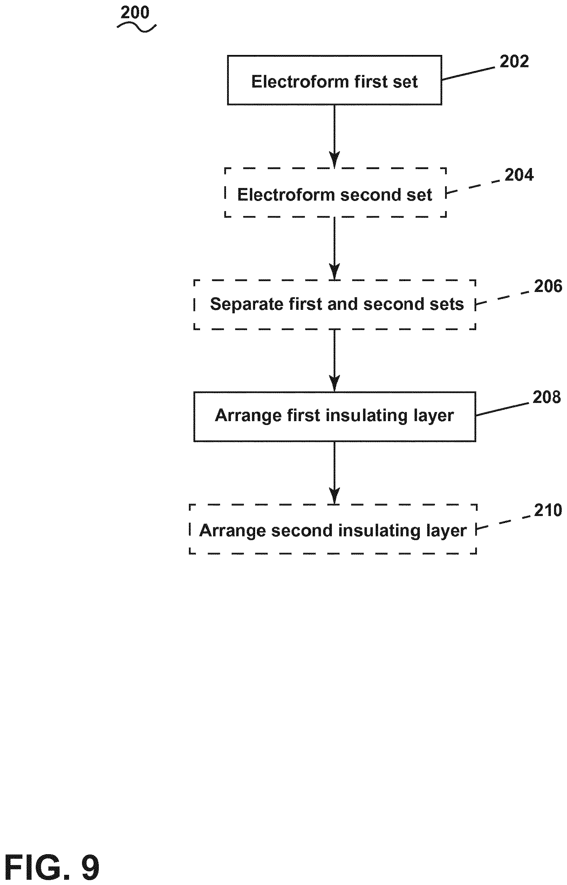

FIG. 9 illustrates a method 200 of forming the electrical machine 1 (FIG. 1) or a component thereof, such as the rotor 32 or stator 34. The method includes at 202 electroforming the first set 61 of metal laminates 64 having the first predetermined geometry 80. The electroforming can include forming a set of exposed regions on a base sheet that carries the metal laminates, including forming a recess in the base sheet or applying a mask to the base sheet, such that the metal laminates 64 can be formed with the first predetermined geometry 80. Optionally, the method can include at 204 electroforming the second set 62 of metal laminates 64 having the second predetermined geometry 90 as described above. A mask or a recess can also be utilized to electroform the second set 62 of metal laminates 64 with the second predetermined geometry 90. It will be understood that while the first and second sets have been specifically described with respect to one of a rotor or stator, respectively, that the terms and associated claims are not so limited.

Optionally, the method at 206 can include separating the first set 61 from the second set 62, such as when the first and second sets 61, 62 are simultaneously electroformed and may have residual points of contact there between. The separation can be performed by any suitable method such as laser cutting.

Optionally, the method can also include separating at least one of the first set 61 of metal laminates 64 or one of the second set 62 of metal laminates 64 from a remainder of a batch 70, 170 to define a scrap part 59. The scrap part 59 is illustrated in FIG. 7 with a dashed outline to indicate that one metal laminate 64 from the first set 61 and one metal laminate 64 from the second set 62 form the scrap part 59. For example, a process irregularity or undesirable part tolerance in one of the electroformed component could then define the scrap part 59. Alternately, a scrap part 59 can be defined based on a predetermined or desired numbers of electroformed metal laminates in a batch 70, 170, e.g. excess metal laminates can define scrap parts. In such a case, the scrap part 59 can be recycled to form additional metal laminates 64 during a subsequent or additional electroforming process, such as when making successive batches 70, 170.

At 208, the method includes arranging an insulating layer, such as the first set 71 of insulating layers 74, between each in the first set 61 of metal laminates 64 in a first stack 56 to define a layered electrical machine component such as the rotor 32 having the first predetermined geometry 80. Optionally, the method includes at 210 arranging the second set 72 of insulating layers 74 between each in the second set 62 of metal laminates 64 to define a second layered electrical machine component, such as the stator 34 having the second predetermined geometry 90. The first and second sets 61, 62 of metal laminates 64 can be simultaneously electroformed; in addition, either of the first or second sets 61, 62 can be electroformed in batches 70, 170 as described above.

Aspects of the present disclosure provide for a variety of benefits. Traditional methods of forming metal laminates, such as rolling and stamping, have an inherent variance in laminate thickness such as 10%, which can lead to non-uniform component lengths when stacks are formed from multiple laminates. In contrast, the batch electroforming process provides for less variation in laminate thickness, such as less than 1 micrometer in one example. In addition, the ability to recycle unused or remaining metal portions in subsequent electroforming processes leads to reduced or zero waste as compared to stamping processes that create significant amounts of scrap. Another advantage is that the use of electroforming to create metal laminates with predetermined geometry is faster and more efficient compared to traditional forming processes, as the predetermined geometry or geometric profile needs no additional machining to create.

In addition, where traditional methods include machining operations to form the metal laminates, such operations can introduce imperfections such as burrs at exposed edges of the finished part. These imperfections can reduce the effectiveness of insulating layers stacked thereon, such as providing additional conductive paths for eddy currents to flow. It can be appreciated that electroforming the completed metal laminate without such additional machining processes can improve the finish quality of the completed part, improving durability and performance when assembled into the stack to form the generator core. Therefore, benefits of the present disclosure include that the electroformed laminates can include insulation therebetween that can be thin enough to make eddy current losses negligible.

Still another advantage of the present disclosure is provided in the material options available for use in the metal laminates as described herein. Traditional metals used in stamping or rolling have a magnetic strength saturation of approximately 2.3 Tesla, whereas metals that can be utilized in electroforming processes can have a greater magnetic strength saturation such as 2.5 Tesla, leading to a more durable part in operation.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new examples, whether or not the new examples are expressly described. Moreover, while "a set of" various elements have been described, it will be understood that "a set" can include any number of the respective elements, including only one element. Combinations or permutations of features described herein are covered by this disclosure.

This written description uses examples to disclose aspects of the invention, including the best mode, and also to enable any person skilled in the art to practice aspects of the invention, including making and using any devices or systems and performing any incorporated methods. The patentable scope of the invention is defined by the claims, and can include other examples that occur to those skilled in the art. Such other examples are intended to be within the scope of the claims if they have structural elements that do not differ from the literal language of the claims.

## Claims

1. A method (200) of forming a layered electrical machine component for an electrical machine (1), the method (200)
comprising:
electroforming (202) a first metallic layer having a first predetermined geometry (80, 280), thereby forming a first discrete metal laminate;
electroforming (202) a second metallic layer separate from the first metallic layer and also having the first predetermined geometry (80, 280), thereby forming a second discrete metal laminate, wherein the first discrete metal laminate and the second discrete metal laminate at least partially define a first set (61, 261) of discrete metal laminates (64) having the first predetermined geometry (80, 280), wherein the electroforming (202) comprises electrodeposition (202) onto a polymeric or composite base sheet (60), and one or both of the first set (61, 261) of discrete metal laminates (64) is formed in a batch (70, 170, 270), the batch (70, 170, 270) being a collection of metal laminates (64) having the first predetermined geometry (80) and formed on the polymeric or composite base sheet (60); and
arranging (208) an insulating layer (74) between the first discrete metal laminate and the second discrete metal laminate in a stack to define a layered electrical machine component having the first predetermined geometry (80, 280).

2. The method (200) of claim 1, further comprising electroforming (204) a second set (62, 262) of discrete metal laminates (64), each of the second set of discrete metal laminates (64) having a second predetermined geometry (90, 290), wherein the electroforming (202) comprises electrodeposition (202) onto a base sheet (60).

3. The method (200) of claim 2, further comprising simultaneously electroforming the first (61, 261) and second (62, 262) sets of discrete metal laminates (64).

4. The method (200) of any one of claims 2-3 wherein the second predetermined geometry (90, 290) comprises an outer rim (91) connecting multiple radial spokes (92).

5. The method (200) of any one of claims 2-4, further comprising separating (206) one of the first set (61, 261) of discrete metal laminates (64) or one of the second set (62, 262) of discrete metal laminates (64) from a remainder of the batch (70, 170, 270) to define a scrap part (99).

6. The method (200) of claim 5, further comprising recycling the scrap part (99) to form additional discrete metal laminates (64) during an additional electroforming process.

7. The method (200) of any one of claims 1-6, further comprising forming at least one exposed region (67) on the base sheet (60, 160) prior to the electroforming, wherein the at least one exposed region (67) has the first predetermined geometry (80, 280).

8. The method (200) of claim 7 wherein the forming at least one exposed region (67) further comprises at least one of applying a mask (63) to the base sheet (60, 160) or forming a recess (65) in the base sheet (60, 160).

9. The method (200) of any one of claims 7-8, further comprising applying a conductive treatment to the at least one exposed region (67) prior to the electroforming (202, 204).

10. The method (200) of any one of claims 1-9 wherein the layered electrical machine component comprises one of a rotor (32) or a stator (34) suitable for use in a turbine engine (14).

## Patentansprüche

1. Verfahren (200) zum Formen einer geschichteten elektrischen Maschinenkomponente für eine elektrische Maschine (1), das Verfahren (200) umfassend:
Galvanoformen (202) einer ersten Metallschicht mit einer ersten vorbestimmten Geometrie (80, 280), wodurch ein erstes diskretes Metalllaminat geformt wird;
Galvanoformen (202) einer zweiten Metallschicht, die von der ersten Metallschicht getrennt ist und ebenfalls die erste vorbestimmte Geometrie (80, 280) aufweist, wodurch ein zweites diskretes Metalllaminat gebildet wird, wobei das erste diskrete Metalllaminat und das zweite diskrete Metalllaminat mindestens teilweise einen ersten Satz (61, 261) diskreter Metalllaminate (64) mit der ersten vorbestimmten Geometrie (80, 280) aufweisen, wobei das Galvanoformen (202) die galvanische Abscheidung (202) auf einer Polymer- oder Verbundbasisfolie (60) umfasst, und eines oder beide des ersten Satzes (61, 261) diskreter Metalllaminate (64) in einer Charge (70, 170, 270) gebildet werden, wobei die Charge (70, 170, 270) eine Sammlung von Metalllaminaten (64) ist, die die erste vorbestimmte Geometrie (80) aufweisen und auf der Polymer- oder Verbundbasisfolie (60) geformt sind; und
Anordnen (208) einer Isolierschicht (74) zwischen dem ersten diskreten Metalllaminat und dem zweiten diskreten Metalllaminat in einem Stapel, um eine geschichtete elektrische Maschinenkomponente mit der ersten vorgegebenen Geometrie (80, 280) zu definieren.

2. Verfahren (200) nach Anspruch 1, ferner umfassend das Galvanoformen (204) eines zweiten Satzes (62, 262) diskreter Metalllaminate (64), wobei jedes des zweiten Satzes diskreter Metalllaminate (64) eine zweite vorbestimmte Geometrie (90, 290) aufweist, wobei das Galvanoformen (202) die galvanische Abscheidung (202) auf ein Basisblech (60) umfasst.

3. Verfahren (200) nach Anspruch 2, ferner umfassend das gleichzeitige Galvanoformen des ersten (61, 261) und des zweiten (62, 262) Satzes von diskreten Metalllaminaten (64).

4. Verfahren (200) nach einem der Ansprüche 2 bis 3, wobei die zweite vorbestimmte Geometrie (90, 290) einen äußeren Rand (91) umfasst, der mehrere radiale Speichen (92) verbindet.

5. Verfahren (200) nach einem der Ansprüche 2 bis 4, ferner umfassend das Trennen (206) eines des ersten Satzes (61, 261) von diskreten Metalllaminaten (64) oder eines des zweiten Satzes (62, 262) von diskreten Metalllaminaten (64) von einem Rest der Charge (70, 170, 270), um ein Abfallteil (99) zu definieren.

6. Verfahren (200) nach Anspruch 5, ferner umfassend das Recyceln des Abfallteils (99) zum Formen zusätzlicher diskreter Metalllaminate (64) während eines zusätzlichen Prozesses des Galvanoformens.

7. Verfahren (200) nach einem der Ansprüche 1 bis 6, ferner umfassend das Formen mindestens eines freiliegenden Bereichs (67) auf dem Basisblatt (60, 160) vor dem Galvanoformen, wobei der mindestens eine freiliegende Bereich (67) die erste vorbestimmte Geometrie (80, 280) aufweist.

8. Verfahren (200) nach Anspruch 7, wobei das Formen mindestens eines freiliegenden Bereichs (67) ferner das Aufbringen einer Maske (63) auf das Basisblatt (60, 160) oder das Formen einer Aussparung (65) in dem Basisblatt (60, 160) umfasst.

9. Verfahren (200) nach einem der Ansprüche 7 bis 8, ferner umfassend das Aufbringen einer leitfähigen Behandlung auf den mindestens einen freiliegenden Bereich (67) vor dem Galvanoformen (202, 204).

10. Verfahren (200) nach einem der Ansprüche 1 bis 9, wobei die geschichtete elektrische Maschinenkomponente entweder einen Rotor (32) oder einen Stator (34) umfasst, der zur Verwendung in einer Turbinenmaschine (14) geeignet ist.

## Revendications

1. Procédé (200) de formation d'un composant de machine électrique en couches pour une machine électrique (1), le procédé (200) comprenant :
l'électroformage (202) d'une première couche métallique ayant une première géométrie prédéterminée (80, 280), formant ainsi un premier stratifié métallique distinct ;
l'électroformage (202) d'une seconde couche métallique séparée de la première couche métallique et ayant également la première géométrie prédéterminée (80, 280), formant ainsi un second stratifié métallique distinct, dans lequel le premier stratifié métallique distinct et le second stratifié métallique distinct définissent au moins partiellement un premier ensemble (61, 261) de stratifiés métalliques distincts (64) ayant la première géométrie prédéterminée (80, 280), dans lequel l'électroformage (202) comprend une électrodéposition (202) sur une feuille de base polymère ou composite (60), et l'un ou les deux parmi le premier ensemble (61, 261) de stratifiés métalliques distincts (64) sont formés dans un lot (70, 170, 270), le lot (70, 170, 270) étant une collection de stratifiés métalliques (64) ayant la première géométrie prédéterminée (80) et formé sur la feuille de base polymère ou composite (60) ; et
l'agencement (208) d'une couche isolante (74) entre le premier stratifié métallique distinct et le second stratifié métallique distinct dans un empilement pour définir un composant de machine électrique en couches ayant la première géométrie prédéterminée (80, 280).

2. Procédé (200) selon la revendication 1, comprenant en outre l'électroformage (204) d'un second ensemble (62, 262) de stratifiés métalliques distincts (64), chacun parmi le second ensemble de stratifiés métalliques distincts (64) ayant une seconde géométrie prédéterminée (90, 290), dans lequel l'électroformage (202) comprend une électrodéposition (202) sur une feuille de base (60).

3. Procédé (200) selon la revendication 2, comprenant en outre l'électroformage simultané des premier (61, 261) et second (62, 262) ensembles de stratifiés métalliques distincts (64).

4. Procédé (200) selon l'une quelconque des revendications 2 ou 3 dans lequel la seconde géométrie prédéterminée (90, 290) comprend un rebord externe (91) reliant de multiples rayons radiaux (92).

5. Procédé (200) selon l'une quelconque des revendications 2 à 4, comprenant en outre la séparation (206) de l'un du premier ensemble (61, 261) de stratifiés métalliques distincts (64) ou de l'un du second ensemble (62, 262) de stratifiés métalliques distincts (64) à partir d'un reste du lot (70, 170, 270) pour définir une partie de débris (99).

6. Procédé (200) selon la revendication 5, comprenant en outre le recyclage de la partie de débris (99) pour former des stratifiés métalliques distincts supplémentaires (64) pendant un processus d'électroformage supplémentaire.

7. Procédé (200) selon l'une quelconque des revendications 1 à 6, comprenant en outre la formation d'au moins une région exposée (67) sur la feuille de base (60, 160) avant l'électroformage, dans lequel l'au moins une région exposée (67) a la première géométrie prédéterminée (80, 280).

8. Procédé (200) selon la revendication 7, dans lequel la formation d'au moins une région exposée (67) comprend en outre au moins l'une parmi l'application d'un masque (63) à la feuille de base (60, 160) ou la formation d'un évidement (65) dans la feuille de base (60, 160).

9. Procédé (200) selon l'une quelconque des revendications 7 ou 8, comprenant en outre l'application d'un traitement conducteur à l'au moins une région exposée (67) avant l'électroformage (202, 204).

10. Procédé (200) selon l'une quelconque des revendications 1 à 9, dans lequel le composant de machine électrique en couches comprend l'un parmi un rotor (32) ou un stator (34) approprié pour être utilisé dans une turbomachine (14).
